# FASCICULE DE BREVET EUROPEEN

(11) **EP 0 587 479 B1**
(45) Date de publication et mention de la délivrance du brevet: **17.07.1996**
(21) Numéro de dépôt: 93402147.8
(22) Date de dépôt: 02.09.1993
(51) Int. Cl.: F16F 15/26, F02B 75/02

(54) **Moteur à deux temps à injection pneumatique et à équilibrage du premier ordre des masses alternatives**
Zweitaktmotor mit pneumatischer Einspritzung und mit Ersteordnungbalanciergerät der hin- und hergehenden Massen
Two-stroke engine with pneumatic injection and first order belancing device for the alternating masses

(30) Priorité: 11.09.1992 FR 9210869
(43) Date de publication de la demande: 16.03.1994
(73) Titulaire: INSTITUT FRANCAIS DU PETROLE, F-92502 Rueil-Malmaison (FR)
(72) Inventeur: Venturi, Stéphane, F-77000 La Rochette (FR); Duret, Pierre, F-78500 Sartrouville (FR)

(56) Documents cités:
- EP-A- 0 126 661
- WO-A-87/00580
- FR-A- 2 288 251
- FR-A- 2 376 946
- FR-A- 2 558 232
- FR-A- 2 623 854
- GB-A- 2 096 705
- US-A- 3 203 274

## Description

L'invention concerne un moteur à deux temps à injection pneumatique commandée, comportant un équilibrage des masses du premier ordre.

Les moteurs à deux temps à un ou plusieurs cylindres comportent généralement, associé à chacun des cylindres, un carter appelé carter-pompe communiquant avec l'une des extrémités de la chambre de combustion du cylindre et assurant l'introduction de gaz frais dans le cylindre, par l'intermédiaire d'au moins un conduit et une ouverture de transfert. Le piston qui se déplace de manière alternative dans le cylindre assure également l'aspiration et la compression des gaz frais dans le carter-pompe. Un clapet d'admission disposé sur le carter-pompe permet l'introduction des gaz frais dans le carter, lorsque le piston se déplace dans la direction opposée au carter, ces gaz frais étant ensuite comprimés et assurant la fermeture du clapet, lorsque le piston se déplace en direction du carter. Lorsque les ouvertures correspondantes du cylindre sont dégagées par le piston, des gaz frais sont introduits dans le cylindre par les conduits et ouvertures de transfert et produisent un balayage de gaz frais destinés à remplacer les gaz brûlés qui sont évacués par des ouvertures d'échappement généralement disposées de façon décalée par rapport aux ouvertures de transfert. Le piston se déplace en s'éloignant du carter de manière à comprimer les gaz contenus dans le cylindre. L'allumage et la combustion d'un mélange d'air et de carburant produisent ensuite le déplacement moteur du piston vers le carter.

Par ailleurs, on connaît de façon particulière des moteurs à deux temps à un ou plusieurs cylindres comportant, associé à chacun des cylindres, un dispositif d'injection pneumatique de carburant réalisant la pulvérisation d'un carburant liquide par un gaz sous pression qui est généralement de l'air comprimé, et l'introduction du mélange carburé obtenu dans le cylindre du moteur. L'alimentation et le balayage du cylindre par de l'air frais sont alors réalisés indépendamment de l'injection pneumatique de carburant qui est déclenchée à un instant déterminé du cycle de fonctionnement du moteur.

Plus spécifiquement, le dispositif d'injection pneumatique de carburant peut comporter une chambre qui peut être mise en communication avec la chambre intérieure du cylindre par l'intermédiaire d'un dispositif spécifique appelé dans la suite de la description dispositif de commande de l'injection pneumatique. Le dispositif de commande propre à chaque cylindre peut être constitué par une soupape automatique, une soupape commandée, un boisseau rotatif...

Dans ce type d'injection, le gaz sous pression peut provenir soit d'un réservoir auxiliaire soit d'une partie du moteur produisant ce gaz sous pression.

En particulier, on a proposé d'alimenter le dispositif d'injection en air comprimé à partir d'une capacité dont le rechargement est effectué par le carter-pompe assurant l'alimentation et le balayage en air frais du cylindre du moteur.

Le document FR-2.623.854 divulgue un moteur présentant les caractéristiques définies ci-dessus.

L'invention s'applique plus particulièrement au type de moteur qui vient d'être défini et concerne l'équilibrage au premier ordre des masses alternatives.

Le document FR-2.558.232 définit un moteur à combustion interne dans lequel l'équilibrage des forces du premier ordre créé par les masses oscillantes du moteur, est réalisé par des masses additionnelles liées en rotation à l'arbre à came entraîné en rotation par le vilebrequin et par des masses additionnelles liées en rotation au vilebrequin.

Il est connu de l'homme du métier que l'équilibrage d'un moteur au premier ordre nécessite un arbre différent du vilebrequin et tournant à la même vitesse et en sens inverse.

La présente invention propose une solution au problème de l'équilibrage au premier ordre de moteurs du type précité.

Vis-à-vis de l'art antérieur et notamment du document FR-2.558.232, la présente invention vise une solution plus simple donc moins coûteuse et plus fiable.

En effet, la présente invention ne prévoit pas de système à engrenage comme système d'entraînement.

Aucune lubrification (associée aux engrenages) n'est donc nécessaire.

De plus, selon l'invention, l'usure des pièces mises en mouvement est très faible ; l'ensemble est plus silencieux.

En outre, la présence de poulies de renvoi peut avantageusement être mise à profit pour entraîner d'autres éléments liés ou non au fonctionnement du moteur.

Pour atteindre notamment les buts ci-dessus énoncés, la présente invention concerne un moteur à deux temps comportant un vilebrequin tournant autour d'un premier axe de rotation et ayant au moins une masse d'équilibrage, un moyen de commande de l'alimentation d'au moins une chambre de combustion tournant autour d'un deuxième axe de rotation parallèle audit premier axe de rotation et entraîné en rotation par le vilebrequin, au moins une masse d'équilibrage étant liée en rotation audit moyen de commande de l'alimentation afin de réaliser un équilibrage du premier ordre des masses alternatives. Un tel moteur est connu du document EP-A-0 126 661.

Le moteur selon l'invention comporte un système d'injection pneumatique du carburant utilisant une partie de la charge en air pour pulvériser le carburant dans la chambre de combustion à des instants prédéterminés du cycle de fonctionnement ; l'entraînement contrarotatif du moyen de commande de l'injection pneumatique par ledit vilebrequin est réalisé par l'intermédiaire d'une courroie dentée sur ses deux faces, et par en outre au moins deux poulies de renvoi entraînées par ladite courroie et dont l'axe de rotation peut être parallèle à l'axe du vilebrequin, l'axe de l'une au moins des poulies de renvoi étant destiné à entraîner en rotation d'autres éléments liés ou non au fonctionnement du moteur.

Préférentiellement, l'un au moins des autres éléments entraînés par l'une au moins desdites poulies de renvoi peut être choisi parmi le groupe formé par un alternateur, une pompe à eau, une pompe à vide ou une pompe à essence.

L'invention sera mieux comprise, d'autres détails, particularités et avantages ressortiront mieux à la lecture de la description qui va suivre, fait à titre illustratif et nullement limitatif, en référence aux dessins annexés selon lesquels :
- la figure 1 représente en coupe longitudinale un moteur selon l'invention,
- la figure 2 est un schéma illustrant l'entraînement de l'arbre à came par le vilebrequin, selon l'invention, et
- la figure 2A montre un détail de la courroie de transmission.

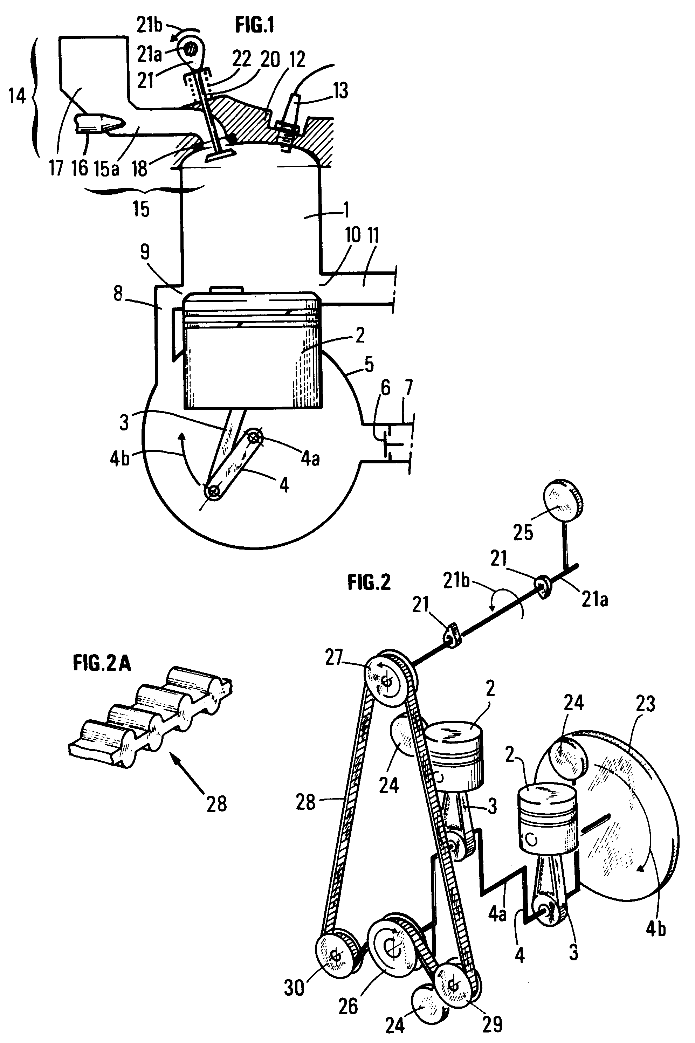

Sur la figure 1, on voit un cylindre 1 d'un moteur à deux temps dans lequel se déplace de manière alternative un piston 2 relié par l'intermédiaire d'une bielle 3 à un vilebrequin 4. Le cylindre 1 communique par sa partie inférieure ouverte avec un carter-pompe 5 dans lequel le piston 2 peut pénétrer partiellement dans son déplacement vers son point mort bas, comme représenté sur la figure 1. Le carter 5 comporte une conduite d'admission d'air 7 dont l'ouverture et la fermeture sont commandées par un clapet 6. Le piston 2, dans son déplacement vers son point mort bas, est susceptible de comprimer l'air contenu dans le carter 5 et de le refouler dans des conduits tels que 8 débouchant par des lumières de transfert 9 dans la chambre du cylindre 1. Le balayage du cylindre 1 par de l'air frais est ainsi assuré grâce au carter 5 et aux conduits 8, lorsque le piston 2 découvre les lumières 9 en se déplaçant vers le bas.

Un conduit d'échappement 11 communique avec la chambre du cylindre 1 par des lumières d'échappement 10 dont la position, dans la direction de la course du piston 2, est légèrement décalée par rapport à la position des lumières de transfert 9 de façon que le piston 2 en se déplaçant vers le bas découvre d'abord les lumières d'échappement 10, puis les lumières de transfert 9 qui assurent le balayage du cylindre 1 en air frais, les gaz brûlés étant évacués par les lumières 10.

Le cylindre 1 est fermé à sa partie supérieure par une culasse 12 sur laquelle est fixée une bougie d'allumage 13 et un ensemble 14 comportant un dispositif d'injection pneumatique 15 et une capacité 17.

Le dispositif d'injection pneumatique qui pourra être désigné par "injecteur pneumatique 15" comporte un injecteur 16 d'alimentation en carburant liquide.

L'injecteur pneumatique 15 peut comporter une chambre 15a ménagée à l'intérieure de la culasse 12 débouchant dans la partie supérieure du cylindre 1 au niveau d'un siège de soupape 18 et une soupape 20 dont la tige est en contact à son extrémité avec une came d'actionnement 21.

L'injecteur d'alimentation en carburant 16 fournit du carburant à la chambre 15a.

La soupape 20 coopère avec le siège 18 pour assurer l'ouverture ou la fermeture de l'injecteur pneumatique, par action de la came 21 et d'un ressort de rappel 22.

Il doit donc exister une relation directe entre le mouvement du piston 2 et celui de la soupape 20. Plus précisément, comme l'indiquent les flèches 4b et 21b, le vilebrequin 4 et la came 21 tournent en sens inverse, à la même vitesse. Ils sont chacun fixés sur un axe, respectivement 4a et 21a.

La figure 2 montre, de façon schématique, la liaison entre le vilebrequin 4 et l'arbre à came 21a dans le cas d'un moteur à deux cylindres.

Selon cette figure, le vilebrequin 4 est entraîné par deux pistons 2 et il entraîne l'arbre à came 21a, via un dispositif spécifique qui sera décrit plus en détail ci-après. Le détail de la fonction particulière des cames de l'arbre à came (commande de l'ouverture des soupapes), bien connue de l'homme du métier, ne sera pas décrite en détail.

Il est par contre nécessaire pour la compréhension de l'invention d'expliciter davantage l'équilibrage dynamique nécessaire pour éviter les oscillations du moteur.

Plus précisément, il s'agit d'équilibrer les masses alternatives du moteur.

Le vilebrequin 4 porte un volant d'inertie 23 à l'une de ses extrémités. Dans l'exemple de réalisation de la figure 2, deux (ou plusieurs) contrepoids 24 permettent un équilibrage du vilebrequin. En outre, au niveau de l'arbre à came 21a, deux (ou plusieurs) autres masses y sont fixées afin d'équilibrer dynamiquement le moteur.

Comme il a déjà été dit, I'équilibrage dynamique au premier ordre d'un moteur nécessite d'avoir un arbre tournant différent du vilebrequin, tournant en sens opposé. On réalise de préférence cet équilibrage en fixant sur l'arbre à came 21a une ou plusieurs masselottes.

Avantageusement, l'arbre à came remplit ici deux fonctions :
- la rotation des cames qui commandent l'ouverture et la fermeture des soupapes, et
- l'équilibrage des forces du premier ordre crées par les masses oscillantes.

Selon l'invention, la transmission du mouvement entre le vilebrequin 4 et l'arbre à came 21a est réalisée par le système suivant :

Une première poulie 26 dite d'entraînement est fixée sur une extrémité de l'axe 4a du vilebrequin. Une seconde poulie 27 est fixée sur une extrémité de l'arbre à came 21a. Ces deux poulies tournent en sens inverse grâce à une courroie 28 à double denture qui passe successivement sur la poulie d'entraînement 26, sur une première poulie de renvoi 29, sur la poulie 27 puis enfin sur une deuxième poulie de renvoi 30. Les poulies 26, 27, 29 et 30 sont bien entendu dans un même plan et la courroie 28 crantée sur ses deux faces permet par un agencement simple fiable et peu coûteux d'avoir une transmission contrarotative entre la poulie d'entraînement 26 liée au vilebrequin et la poulie 27 de l'arbre à came.

Le fait que tous les composants de la transmission, c'est-à-dire toutes les poulies, soient dans un même plan, permet par rapport à l'art antérieur précité, d'avoir un encombrement moindre.

La figure 2A montre plus spécifiquement la courroie 28 à double denture qui peut par exemple être constituée, de manière connue en soi, d'une armature (métallique, tressée...) noyée dans du caoutchouc ayant un profil denté sur ses deux faces.

Sans sortir du cadre de la présente invention, l'arbre à came 21a associé à la (ou aux) soupape(s) 20 peut être remplacé par un axe sur lequel sont fixés un ou plusieurs boisseaux rotatifs remplissant la même fonction que les soupapes définies ci-avant à savoir la commande de l'injection pneumatique : ouverture/ fermeture de l'alimentation en mélange carburé dans la chambre de combustion 1.

En outre, de façon particulièrement avantageuse, l'une au moins des poulies de renvoi 29, 30 peut être utilisée pour entraîner en rotation d'autres éléments liés ou non au fonctionnement propre du moteur. Ainsi, l'alternateur, la pompe à eau, une pompe à vide (utilisée pour le freinage) une pompe de circulation, une pompe de suspension hydraulique, ou encore une pompe à essence... pourront être entraînés par l'une des poulies de renvoi.

La présente invention s'applique plus spécifiquement à un moteur à deux temps à injection pneumatique dans lequel une partie de la charge en air est utilisée pour réaliser l'injection pneumatique tandis que l'autre partie de la charge en air est introduite dans le cylindre grâce à au moins une lumière 9 découverte par le piston 2. En outre, le piston 2 découvre au moins une autre lumière 10 dite d'échappement.

Bien entendu, d'autres aménagements et/ou modifications pourront être apportés par l'homme du métier au système qui vient d'être décrit sans sortir du cadre de la présente invention, definie par la revendication 1.

## Revendications

1. Moteur à deux temps comportant un vilebrequin (4) tournant autour d'un premier axe de rotation (4a) et ayant au moins une masse d'équilibrage (24), un moyen (21) de commande de l'alimentation d'au moins une chambre de combustion (1) tournant autour d'un deuxième axe de rotation (21) parallèle audit premier axe de rotation (4a) et entraîné en rotation par le vilebrequin (4), au moins une masse d'équilibrage (25) étant liée en rotation audit moyen de commande de l'alimentation afin de réaliser un équilibrage du premier ordre des masses alternatives, caractérisé en ce que le moteur comporte un système (15) d'injection pneumatique du carburant utilisant une partie de la charge en air du moteur pour pulvériser le carburant dans la chambre de combustion 1 à des instants prédéterminés du cycle de fonctionnement et en ce que l'entraînement contrarotatif du moyen (21a) de commande de l'injection pneumatique par ledit vilebrequin (4) est réalisé par l'intermédiaire d'une courroie (28) dentée sur ses deux faces et par en outre au moins deux poulies de renvoi (29, 30) entraînées par ladite courroie (28) et dont l'axe de rotation est parallèle à l'axe (4a) du vilebrequin (4), l'axe de l'une au moins des poulies de renvoi étant destiné à entraîner en rotation d'autres éléments liés ou non au fonctionnement du moteur.

2. Moteur selon la revendication 1, caractérisé en ce que l'un au moins des autres éléments entraînés par l'une au moins desdites poulies de renvoi est choisi parmi le groupe formé par un alternateur, une pompe à eau, une pompe à vide ou une pompe à essence.

3. Moteur selon l'une quelconque des revendications précédentes, caractérisé en ce que l'autre partie de la charge en air est introduite par au moins une lumière (9) découverte par le piston (2).

4. Moteur selon l'une quelconque des revendications précédentes, caractérisé en ce que l'échappement est réalisé à travers au moins une lumière (10) découverte par le piston (2).

## Patentansprüche

1. Zweitaktmotor, umfassend eine Kurbelwelle (4) , die um eine erste Drehachse (4a) dreht und wenigstens eine Ausgleichsmasse (24) aufweist, eine Einrichtung (21) zur Steuerung der Zufuhr von wenigstens einer Brennkammer (1), die um eine zweite zu der ersten Drehachse (4a) parallele Drehachse (21) dreht und durch die Kurbelwelle (4) drehangetrieben ist, wobei wenigstens eine Ausgleichsmasse (25) mit der Einrichtung zur Steuerung der Zufuhr drehverbunden ist, um einen Ausgleich erster Ordnung von sich hin- und herbewegenden Massen vorzunehmen, dadurch gekennzeichnet, daß der Motor ein System (15) zur pneumatischen Einspritzung des Kraftstoffes umfaßt, das einen Teil der Charge an Luft des Motors verwendet, um den Kraftstoff in der Brennkammer (1) zu vorbestimmten Zeitpunkten des Betriebszyklus zu zerstäuben, und daß ein gegenläufiger Antrieb der Einrichtung (21a) zur Steuerung der pneumatischen Einspritzung durch die Kurbelwelle (4) durch die Zwischenschaltung eines Riemens (28), der an seinen zwei Seiten mit Zähnen versehen ist, und durch außerdem wenigstens zwei Umlenkrollen (29, 30), die durch den Riemen (28) angetrieben sind und deren Drehachse parallel zu der Achse (4a) der Kurbelwelle (4) ist, realisiert ist, wobei die Achse der wenigstens einen der Umlenkrollen bestimmt ist, andere Elemente, welche mit dem Betrieb des Motors verbunden oder nicht verbunden sind, in Drehung zu versetzen.

2. Motor nach Anspruch 1, dadurch gekennzeichnet, daß das wenigstens eines der anderen Elemente, welche durch die wenigstens eine der Umlenkrollen angetrieben ist, aus der Gruppe ausgewählt ist, welche durch einen Wechselstromgenerator, eine Wasserpumpe, eine Vakuumpumpe oder eine Benzinpumpe gebildet ist.

3. Motor nach einem der vorhergehenden Ansprüche, dadurch gekennzeichnet, daß der andere Teil der Charge an Luft über wenigstens einen Schlitz (9) eingeführt ist, der durch den Kolben (2) freigegeben ist.

4. Motor nach einem der vorhergehenden Ansprüche, dadurch gekennzeichnet, daß der Auslaß über wenigstens einen Schlitz (10) vorgenommen ist, der durch den Kolben (2) freigegeben ist.

## Claims

1. Two-stroke engine having a crankshaft (4) rotating about a first axis of rotation (4a) and having at least one balancing weight (24), a means (21) for controlling the supply to at least one combustion chamber, (1) rotating about a second axis of rotation (21) parallel to the said first axis of rotation (4a) and driven in rotation by the crankshaft (4), at least one balancing weight (25) being joined in rotation to the said supply control means so as to provide a balance of the first order of the reciprocating masses, characterised in that the engine has a pneumatic fuel injection system (15) which uses a part of the air charge of the engine to vaporise the fuel inside the combustion chamber 1 at predetermined instants of the working cycle and in that the said crankshaft drives the pneumatic injection control means (21a) by means of a belt (28) having teeth on its two faces and in addition by means of at least two return pulleys (29, 30) driven by the said belt (28) and whose axis of rotation is parallel to the axis (4a) of the crankshaft (4), the axle of at least one of the said return pulleys being designed to drive other elements in rotation, which may or may not be connected to the working of the engine.

2. Engine as claimed in claim 1, characterised in that at least one of the other elements driven by at least one of the said return pulleys is selected from the group consisting of an alternator, a water pump, a vacuum pump or a petrol pump.

3. Engine as claimed in any one of the previous claims, characterised in that the other part of the air charge is introduced through at least one port (9) uncovered by the said piston (2).

4. Engine as claimed in any one of the previous claims, characterised in that the exhaust is effected via at least one port (10) uncovered by the piston (2).
